# EUROPEAN PATENT APPLICATION

(11) **EP 4 239 863 A1**
(43) Date of publication of application: **06.09.2023**
(21) Application number: 21886082.3
(22) Date of filing: 22.10.2021
(51) Int. Cl.: H02K 3/28, B25F 5/00

(54) **WORK MACHINE**

(30) Priority: 29.10.2020 JP 2020181851
(71) Applicant: Koki Holdings Co., Ltd., Tokyo 108-6020 (JP)
(72) Inventor: INUI, Ken, Hitachinaka-City, Ibaraki 3128502 (JP); NAKANO, Ryosuke, Hitachinaka-City, Ibaraki 3128502 (JP); SO, Chisho, Hitachinaka-City, Ibaraki 3128502 (JP); GUNJI, Satoru, Hitachinaka-City, Ibaraki 3128502 (JP)
(74) Representative: Meissner Bolte Partnerschaft mbB
(86) International application number: PCT/JP2021/039073
(87) International publication number: WO 2022/091964

(57) **Abstract**

Provided is a work machine in which the complication of a motor structure (motor coil connection structure) may be suppressed by devising the structure of the motor. The work machine has a brushless motor, and the brushless motor has a plurality of teeth 6g. A stator coil is wound around each of the teeth 6g. An end portion of each stator coil is connected to a circuit board 6n. The circuit board 6n has: a first conductor pattern 64 connecting the stator coils wound around adjacent teeth 6g; and a second conductor pattern 65 and a third conductor pattern 66 each connecting the stator coils wound around the non-adjacent teeth 6g. The plurality of stator coils are in the form of delta connection parallel winding.

## Description

### Technical Field

The present invention relates to a work machine having a plurality of coils on its stator.

### Related Art

Work machines such as power tools are becoming more powerful. Devising the wiring method of the motor coils contributes to higher output. Patent Literature 1 listed below describes an electric tool in which multiple phases are delta-connected and multiple coils of each phase are connected in parallel, that is, the so-called delta connection parallel winding, to improve the performance of the motor.

### Citation List

### Patent Literature

[Patent Literature 1] JP2016-179536

### SUMMARY OF INVENTION

### Technical problems

Although it is possible to improve the performance of a motor by devising the wiring method of motor coils, there is a problem that the structure of the motor, for example, the connection structure of the motor coils becomes complicated.

The present invention has been made in recognition of such a situation, and an object thereof is to provide a work machine in which the structure of the motor (the connection structure of the motor coils) is devised to improve the assembling efficiency, and moreover, to provide a work machine that facilitates the connection of motor coils.

Solution to Problem

One aspect of the present invention is a work machine. The work machine includes a brushless motor having a stator having a plurality of teeth, a rotor rotating with respect to the stator, and a winding having coils wound around each of the plurality of teeth; and an output portion driven by the brushless motor. The work machine further includes: a short-circuit portion having a first short-circuit portion that connects coils wound around teeth that are adjacent and a second short-circuit portion that connects coils wound around teeth that are non-adjacent. According to this aspect, it is possible to easily connect a plurality of coils. Thus, it is possible to easily assemble a motor. Moreover, the degree of freedom in design can be improved.

Another aspect of the present invention is a work machine. This work machine includes a brushless motor having a stator having a plurality of teeth, a rotor rotating with respect to the stator, and a winding wound around the stator; a circuit board to which the winding is connected; and an output portion driven by the brushless motor. The winding has a plurality of coils forming mutually different phases and a plurality of coils forming the same phase. The plurality of coils forming mutually different phases and/or the plurality of coils forming the same phase are connected by a short-circuit portion provided on the circuit board. According to this aspect, it is possible to easily connect a plurality of coils. Thus, it is possible to easily assemble a motor. Moreover, the degree of freedom in design can be improved.

A circuit board to which the winding is connected may be provided, and the short-circuit portion may be a pattern formed on the circuit board. Accordingly, there is no need to provide a member dedicated to short-circuiting.

In the winding, a plurality of the coils of different phases may be delta-connected, and a plurality of the coils of the same phase may be connected in parallel. Accordingly, a high output can be obtained without complicating the connection of the coils.

The winding may be sequentially wound around teeth that are adjacent in the plurality of teeth. Accordingly, the connecting wire can be simplified, and the connection can be easily performed.

A first pattern for connecting coils wound around the teeth that are non-adjacent or that face each other may be formed in a first region of the circuit board; a second pattern for connecting coils wound around the teeth that are non-adjacent or that face each other may be formed in a second region of the circuit board; and a third pattern for connecting coils wound around the teeth that are non-adjacent or that face each other may be formed in a third region of the circuit board.

The winding is sequentially wound around teeth that are adjacent in one direction in the plurality of teeth, then wound around teeth that face each other in the plurality of teeth, and wound around teeth that are adjacent in the other direction. Accordingly, the short-circuit portion may be made smaller, and for example, a circuit board of two layers can be realized.

The winding may be wound around teeth that face each other, sequentially wound around teeth that are adjacent in one direction, wound around teeth that face each other, and wound around teeth that are adjacent in the other direction. Accordingly, the short-circuit portion may be made smaller, and for example, a circuit board of two layers can be realized.

A first pattern for connecting the coils wound around the teeth that are adjacent may be formed a the first region of the circuit board; a second pattern for connecting coils wound around teeth that are non-adjacent may be formed in a second region of the circuit board; and a third pattern for connecting coils wound around teeth that are non-adjacent may be formed in a third region of the circuit board.

The winding may be wound around every other teeth in one direction in the plurality of teeth, wound around teeth that face each other, and wound around every other teeth in the other direction. Accordingly, the short-circuit portion may be made smaller, and for example, a circuit board of one layer or two layers can be realized.

The stator has a plurality of teeth around which the winding is wound, and the winding is wound around teeth that face each other in the plurality of teeth, wound around every other teeth in one direction, wound around teeth that face each other, and wound around every other teeth in the other direction. Accordingly, the short-circuit portion may be made smaller, and for example, a circuit board of one layer or two layers can be realized.

A first pattern for connecting coils wound around the teeth that are adjacent may be formed in a first region of the circuit board; a second pattern for connecting coils wound around another of the teeth that are adjacent may be formed in a second region of the circuit board; and a third pattern for connecting coils wound around yet another of the teeth that are adjacent may be formed in the third region of the circuit board.

Yet another aspect of the present invention is a work machine. This work machine includes a brushless motor having a stator having a plurality of teeth, a rotor rotating with respect to the stator, and a winding wound around the stator; a circuit board to which the winding is connected; and an output portion driven by the brushless motor. The winding includes a plurality of delta-connected coils forming mutually different phases and a plurality of parallel-connected coils forming the same phase. The plurality of delta-connected coils and the plurality of parallel-connected coils are connected by a pattern formed on the circuit board. Accordingly, it is possible to realize delta connection parallel winding with a simple configuration while suppressing an increase in the number of components.

Moreover, any combination of the above constituent elements, and conversion of expressions of the present invention between methods, systems, or the like are also effective as an aspect of the present invention.

### Effects of Invention

According to this invention, it is possible to provide a work machine with improved assembling efficiency by devising the structure of a motor (connection structure of motor coils). Moreover, it is possible to provide a work machine that facilitates the connection of motor coils.

### BRIEF DESCRIPTION OF DRAWING

Figure 1 is a side view of a work machine 1 according to an embodiment of the present invention.
Figure 2 is a side sectional view of the work machine 1.
Figure 3 is an exploded perspective view of a stator assembly of a motor 6 of the work machine 1.
Figure 4 is a perspective view of the stator assembly of the motor 6.
Figure 5 is a rear view of the stator assembly of the motor 6 with stator coils 6h and a circuit board 6n omitted.
Figure 6 is a sectional view of the motor 6.
Figure 7 is an explanatory diagram of a winding form 1 in the motor 6.
Figure 8 is an explanatory diagram of a winding form 2 in the motor 6.
Figure 9 is an explanatory diagram of a winding form 3 in the motor 6.
Figure 10 is an explanatory diagram of a winding form 4 in the motor 6.
Figure 11 is an explanatory diagram of a winding form 5 in the motor 6.
Figure 12 is a circuit block diagram of the work machine 1.

### DESCRIPTION OF SIDE

Hereinafter, the same or equivalent constituent elements, members, etc. shown in each drawing are denoted by the same reference numerals, and duplication of description will be omitted as appropriate. The embodiments are examples rather than limitations of the invention. All features and combinations thereof described in the embodiments are not necessarily essential to the invention.

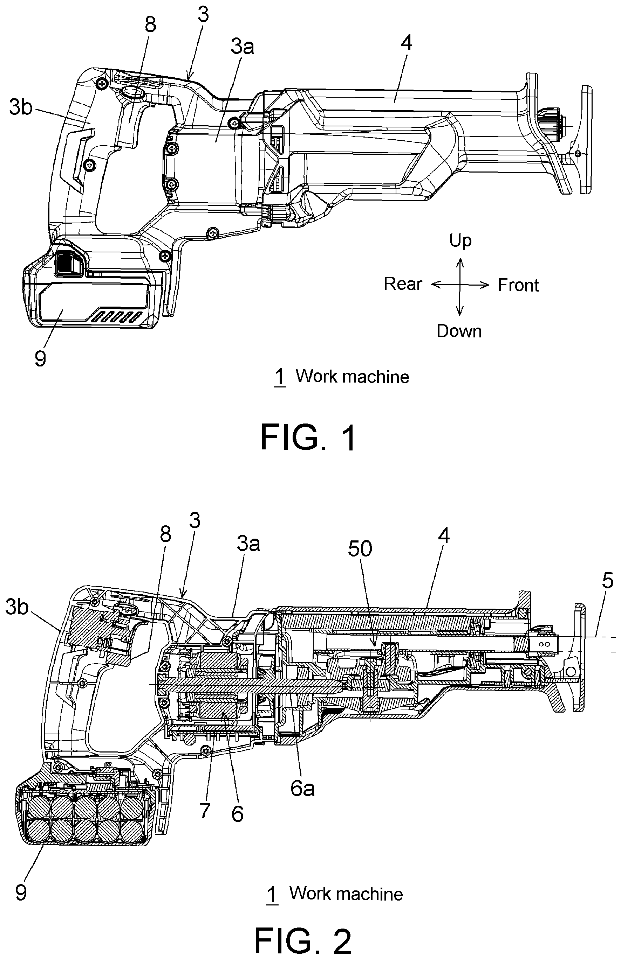

The present embodiment relates to a work machine 1. The work machine 1 is a saber saw. Figure 1 defines front, rear, and up-down directions of the work machine 1 that are orthogonal to each other. As shown in Figures 1 and 2, the work machine 1 includes a housing 3 and a front cover 4 made of, for example, a resin molding. The front cover 4 is connected and fixed to a front end portion of the housing 3.

The housing 3 has a motor accommodation portion 3a that accommodates a motor 6, and a handle portion 3b that may be gripped by an operator. A control board 7 is provided below the motor 6 in the motor accommodation portion 3a. A trigger switch 8 is provided on an upper portion of the handle portion 3b to be operated by an operator to instruct the motor 6 to be driven or stopped. A battery pack 9 is detachably connected to a lower end portion of the handle portion 3b. The work machine 1 operates with power supplied from the battery pack 9.

The motor 6 is a brushless motor, and is held in the motor accommodation portion 3a of the housing 3 such that its rotating shaft is parallel to the front-rear direction. The power of the motor 6 is transmitted by a transmission mechanism 50 to a saw blade 5 as an output portion (tip tool). The transmission mechanism 50 has a reciprocating drive mechanism that converts the rotation of the motor 6 into a reciprocating motion in the front-rear direction and transmits it to the saw blade 5, and a swinging mechanism that swings the saw blade 5 in the up-down direction by the rotation of the motor 6. An operator may switch between enabling and disabling the orbital mode, in which the swing mechanism is operated to swing saw blade 5 in the up-down direction to cut (truncate) the material, using a change lever (not shown). Here, at least one of the saw blade 5 and the transmission mechanism corresponds to the output portion.

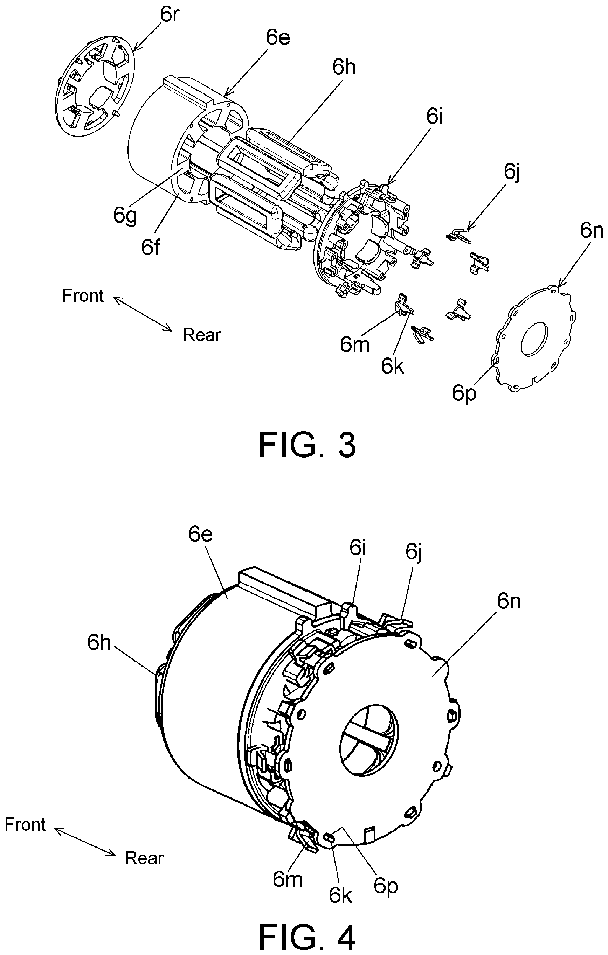

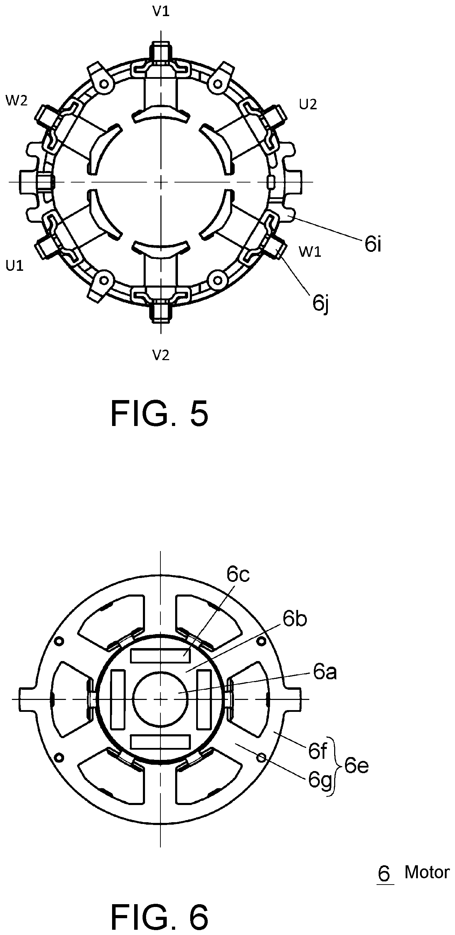

As shown in Figures 3 to 6, the motor 6 includes a cylindrical rotor core 6b that is provided around an output shaft 6a and rotates together with the output shaft 6a; four rotor magnets (permanent magnets) 6c inserted and held in the rotor core 6b at intervals of 90 degrees in the circumferential direction; a stator core 6e provided to surround outer periphery of the rotor core 6b; and six stator coils 6h (Figures 3 and 4) provided in the stator core 6e. The rotor core 6b and the rotor magnet 6c constitute the rotor of the motor 6. The stator core 6e constitutes the stator of the motor 6. The six stator coils 6h constitute the windings of the motor 6. In Figures 5 and 6, the illustration of the stator coils 6h is omitted.

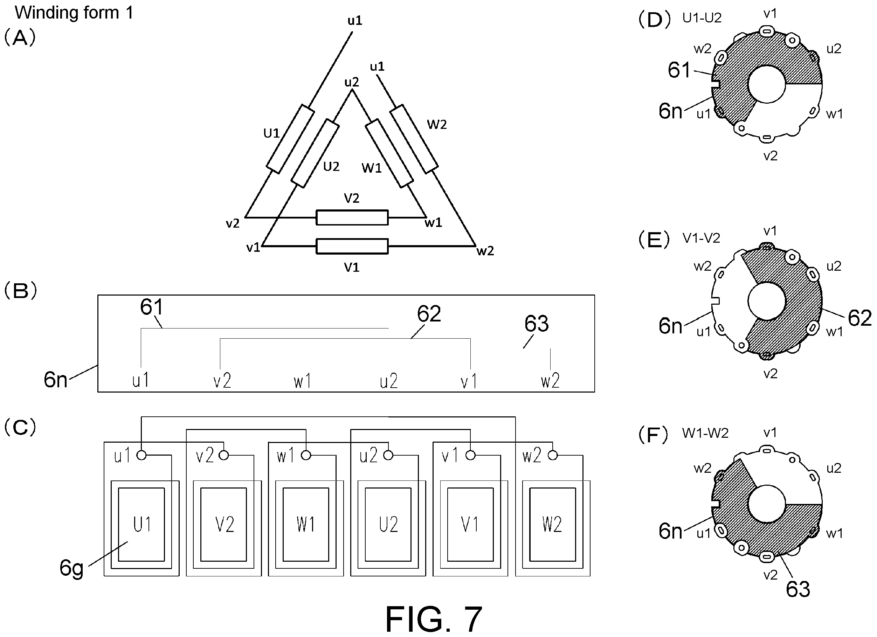

The stator core 6e includes a cylindrical (annular) yoke portion 6f, and six teeth 6g protruding radially inward from the yoke portion 6f. Each of the teeth 6g is provided with the stator coil 6h. That is, each of the teeth 6g forms a winding slot. As shown in (A) of Figure 7 and the like, the stator coil 6h has U-phase stator coils U1, U2; V-phase stator coils V1, V2; and W-phase stator coils W1, W2. The stator coil 6h is arranged in the order of the V-phase stator coil V1, the U-phase stator coil U2, the W-phase stator coil W1, the V-phase stator coil V2, the U-phase stator coil U1, and the W-phase stator coil W2 in the direction around the axis of the motor 6.

As shown in Figures 3 and 4, an insulator 6i is provided on the rear end surface of the stator core 6e. The insulator 6i is, for example, a resin molding. The insulator 6i holds six fusing terminals 6j in the circumferential direction at equal angular intervals. Each of the fusing terminals 6j has a rearwardly extending protruding portion 6k and a hooking portion 6m for hooking an end portion of each stator coil 6h. Each of the fusing terminals 6j is electrically connected to an end portion of each stator coil 6h. A circuit board 6n is connected behind the insulator 6i. The circuit board 6n is fixed to the insulator 6i by screws or the like so as to be perpendicular to the front-rear direction. The circuit board 6n has six through holes 6p at equal angular intervals in the circumferential direction. The protruding portion 6k of each of the fusing terminals 6j passes through each of the through holes 6p and is electrically connected to the circuit board 6n by soldering or the like. An insulator 6r is provided on a front end surface of the stator core 6e.

The winding form of the motor 6 will be described with reference to Figures 7 to 11. In Figures 7 to 11, points u1 and u2 are winding start side end portions of the U-phase stator coils U1 and U2, respectively. Points v1 and v2 are winding start side end portions of the V-phase stator coils V1 and V2, respectively. Points w1 and w2 are winding start side end portions of the W-phase stator coils W1 and W2, respectively. In the motor 6, the stator coil 6h is a delta connection parallel winding. That is, the U-phase stator coils U1 and U2, the V-phase stator coils V1 and V2, and the W-phase stator coils W1 and W2 are delta-connected, and the U-phase stator coils U1 and U2 are connected in parallel, the V-phase stator coils V1 and V2 are connected in parallel, and the W-phase stator coils W1 and W2 are connected in parallel. In the present embodiment, five winding forms of delta connection parallel winding are shown.

(Winding Form 1) (A)-(F) of Figure 7 relate to a winding form 1. (A) of Figure 7 is a schematic diagram showing the wiring order of the stator coils (U1, U2, V1, V2, W1, W2) in the winding form 1. (B) of Figure 7 is a schematic diagram showing the connection relationship of the end portions (u1, u2, v1, v2, w1, w2) of the stator coils on the circuit board 6n in the winding form 1. Figure 7 (C) is a schematic diagram showing the stator coils and their interconnection relationship when the stator core 6e is unfolded and viewed in the winding form 1. (D)-(F) of Figure 7 are schematic diagrams showing the conductor patterns of the circuit board 6n in the winding form 1 by hatching.

As shown in (A) of Figure 7 and (C) of Figure 7, in the winding form 1, windings are sequentially wound around teeth 6g that are adjacent in the six teeth 6g, and are wound in order around the U-phase stator coils U1, the V-phase stator coil V2, the W-phase stator coil W1, the U-phase stator coil U2, the V-phase stator coil V1, and the W-phase stator coil W2. As shown in (B) of Figure 7 and (D) of Figure 7 to (F) of Figure 7, the circuit board 6n is formed with a first conductor pattern 61, a second conductor pattern 62, and a third conductor pattern 63, each of which is made of, for example, copper foil that functions as a short-circuit portion.

The first conductor pattern 61 electrically connects one ends (u1, u2) of the U-phase stator coils U1, U2 wound around teeth 6g that face each other with the central axis of the motor 6 interposed therebetween. The second conductor pattern 62 electrically connects one ends (v1, v2) of the V-phase stator coils V1 and V2 wound around teeth 6g that face each other with the central axis of the motor 6 (hereinafter also referred to as the "central axis") interposed therebetween. The third conductor pattern 63 electrically connects one ends (w1, w2) of the W-phase stator coils W 1, W2 wound around teeth 6g that face each other with the central axis of the motor 6 interposed therebetween.

In the circuit board 6n, a first region where the first conductor pattern 61 is formed, a second region where the second conductor pattern 62 is formed, and a third region where the third conductor pattern 63 is formed partially overlap each other when viewed from the direction perpendicular to the circuit board 6n. Thus, the first conductor pattern 61, the second conductor pattern 62, and the third conductor pattern 63 are provided in different layers of the circuit board 6n. The circuit board 6n has at least three layers on which conductor patterns may be formed.

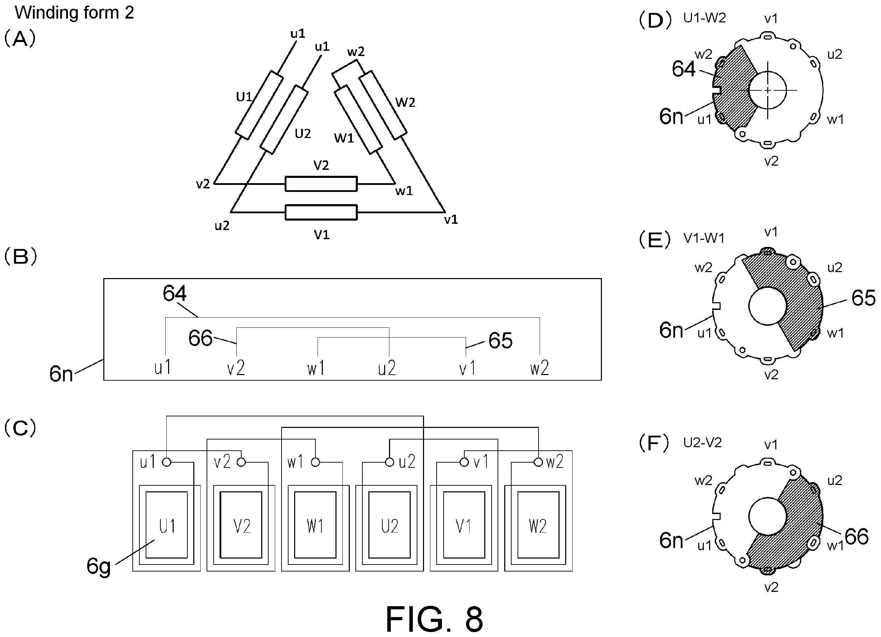

(Winding Form 2) (A)-(F) of Figure 8 relate to a winding form 2. (A) of Figure 8 is a schematic diagram showing the wiring order of the stator coils (U1, U2, V1, V2, W1, W2) in the winding form 2. (B) of Figure 8 is a schematic diagram showing the connection relationship of the end portions (u1, u2, v1, v2, w1, w2) of the stator coils on the circuit board 6n in the winding form 2. Figure 8 (C) is a schematic diagram showing the stator coils and their interconnection relationship when the stator core 6e is unfolded and viewed in the winding form 2. (D)-(F) of Figure 8 are schematic diagrams showing the conductor patterns of the circuit board 6n in the winding form 2 by hatching.

As shown in (A) of Figure 8 and (C) of Figure 8, in the winding form 2, windings are sequentially wound around teeth 6g that are adjacent in one direction in the six teeth 6g, then wound around teeth 6g that face each other with the central axis interposed therebetween, and wound around teeth that are adjacent in the other direction, thereby winding the U-phase stator coils U1, the V-phase stator coils V2, the W-phase stator coils W1, the W-phase stator coils W2, the V-phase stator coils V1, and the U-phase stator coils U2 in order. As shown in (B) of Figure 8 and (D) of Figure 8 to (F) of Figure 8, the circuit board 6n is formed with a first conductor pattern 64, a second conductor pattern 65, and a third conductor pattern 66, each of which is made of, for example, copper foil that functions as a short-circuit portion.

The first conductor pattern 64 is an example of a first short-circuit portion, and electrically connects one ends (u1, w2) of the U-phase stator coil U1 and the W-phase stator coil W2 wound around teeth 6g that are adjacent. The second conductor pattern 65 is an example of a second short-circuit portion, and electrically connects one ends (v1, w1) of the V-phase stator coil V1 and the W-phase stator coil W1 wound around teeth 6g that are non-adjacent. The third conductor pattern 66 is an example of a second short-circuit portion, and electrically connects one ends (u2, w2) of the U-phase stator coil U2 and the W-phase stator coil W2 wound around teeth 6g that are non-adjacent.

In the circuit board 6n, the second region where the second conductor pattern 65 is formed and the third region where the third conductor pattern 66 is formed partially overlap each other when viewed from the direction perpendicular to the circuit board 6n. On the other hand, the first region where the first conductor pattern 64 is formed does not overlap the second region and the third region when viewed from the same direction. For this reason, in (D)-(F) of Figures 8, although the first conductor pattern 64, the second conductor pattern 65, and the third conductor pattern 66 are provided in different layers of the circuit board 6n, the second conductor pattern 65 and the third conductor pattern 66 may be provided in different layers of the circuit board 6n, and the first conductor pattern 64 may be provided in the same layer as the second conductor pattern 65 or the third conductor pattern 66. The circuit board 6n in this case only needs to have at least two layers on which conductor patterns may be formed.

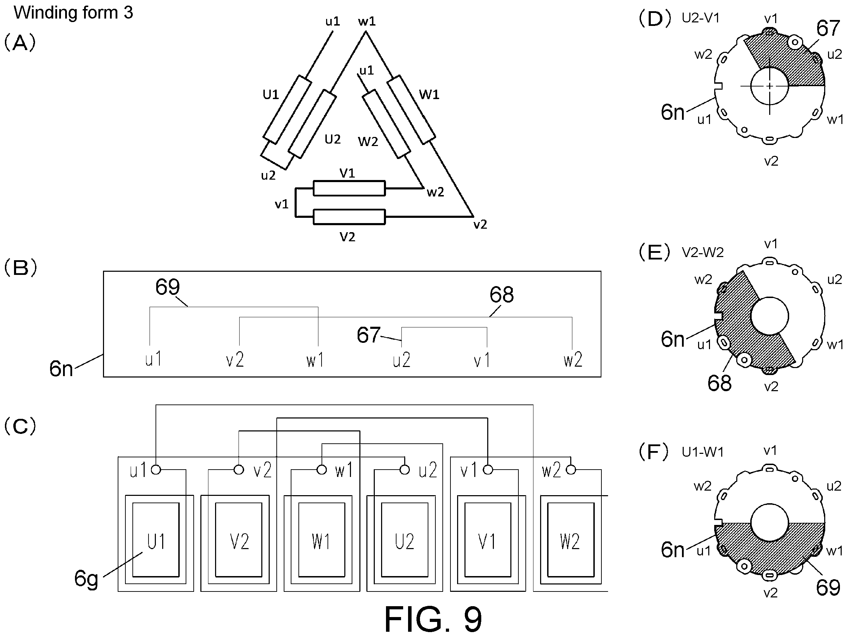

(Winding Form 3) (A)-(F) of Figure 9 relate to a winding form 3. (A) of Figure 9 is a schematic diagram showing the wiring order of the stator coils (U1, U2, V1, V2, W1, W2) in the winding form 3. (B) of Figure 9 is a schematic diagram showing the connection relationship of the end portions (u1, u2, v1, v2, w1, w2) of the stator coils on the circuit board 6n in the winding form 3. Figure 9 (C) is a schematic diagram showing the stator coils and their interconnection relationship when the stator core 6e is unfolded and viewed in the winding form 3. (D)-(F) of Figure 9 are schematic diagrams showing the conductor patterns of the circuit board 6n in the winding form 3 by hatching.

As shown in (A) of Figure 9 and (C) of Figure 9, in the winding form 3, the windings are wound around teeth 6g that face each other, sequentially wound around teeth 6g that are adjacent in one direction, wound around teeth 6g that face each other, and wound around teeth 6g that are adjacent in the other direction, thereby winding the U-phase stator coil U1, the U-phase stator coil U2, the W-phase stator coil W1, the V-phase stator coil V2, the V-phase stator coil V1 and the W-phase stator coil W2 in order. As shown in (B) of Figure 9 and (D)-(F) of Figure 9, the circuit board 6n is formed with a first conductor pattern 67, a second conductor pattern 68, and a third conductor pattern 69, each of which is made of, for example, copper foil that functions as a short-circuit portion.

The first conductor pattern 67 is an example of a first short-circuit portion, and electrically connects one ends (u2, v1) of the U-phase stator coil U2 and the V-phase stator coil V1 wound around teeth 6g that are adjacent. The second conductor pattern 68 is an example of a second short-circuit portion, and electrically connects one ends (v2, w2) of the V-phase stator coil V2 and the W-phase stator coil W2 wound around teeth 6 that are non-adjacent. The third conductor pattern 69 is an example of a second short-circuit portion, and electrically connects one ends (u1, w1) of the U-phase stator coil U1 and the W-phase stator coil W1 wound around teeth 6 that are non-adjacent.

In the circuit board 6n, the second region where the second conductor pattern 68 is formed and the third region where the third conductor pattern 69 is formed partially overlap each other when viewed from the direction perpendicular to the circuit board 6n. On the other hand, the first region where the first conductor pattern 67 is formed does not overlap the second region and the third region when viewed from the same direction. For this reason, although the first conductor pattern 67, the second conductor pattern 68, and the third conductor pattern 69 are provided in different layers of the circuit board 6n in (D)-(F) of Figure 9, the second conductor pattern 68 and the third conductor pattern 69 may be provided in different layers of the circuit board 6n, and the first conductor pattern 67 may be provided in the same layer as the second conductor pattern 68 or the third conductor pattern 69. The circuit board 6n in this case only needs to have at least two layers on which conductor patterns may be formed.

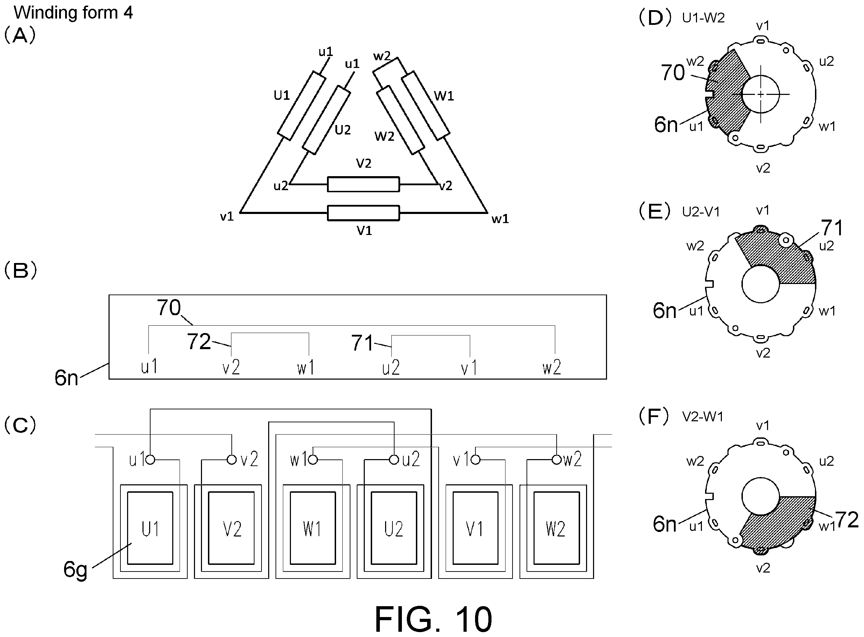

(Winding Form 4) (A)-(F) of Figure 10 relate to a winding form 4. (A) of Figure 10 is a schematic diagram showing the wiring order of the stator coils (U1, U2, V1, V2, W1, W2) in the winding form 4. (B) of Figure 10 is a schematic diagram showing the connection relationship of the end portions (u1, u2, v1, v2, w1, w2) of the stator coils on the circuit board 6n in the winding form 4. Figure 10 (C) is a schematic diagram showing the stator coils and their interconnection relationship when the stator core 6e is unfolded and viewed in the winding form 4. Figure (D)-(F) of Figure 10 are schematic diagrams showing the conductor patterns of the circuit board 6n in the winding form 4 by hatching.

(A) of Figure 10 and (C) of Figure 10, in the winding form 4, the windings are wound around every other teeth 6g in one direction in the six teeth 6g, wound around teeth 6g that face each other, and wound around every other teeth 6g in the other direction, thereby winding the U-phase stator coil U1, the V-phase stator coil V1, the W-phase stator coil W1, the W-phase stator coil W2, the V-phase stator coil V2, and the U-phase stator coil U2 in order. As shown in (B) of Figure 10 and (D)-(F) of Figure 10, the circuit board 6n is formed with a first conductor pattern 70, a second conductor pattern 71, and a third conductor pattern 72, each of which is made of, for example, copper foil that functions as a short-circuit portion.

The first conductor pattern 70 electrically connects one ends (u1, w2) of the U-phase stator coil U1 and the W-phase stator coil W2 wound around teeth 6g that are adjacent. The second conductor pattern 71 electrically connects one ends (u2, v1) of the U-phase stator coil U2 and the V-phase stator coil V1 wound around teeth 6g that are adjacent. The third conductor pattern 72 electrically connects one ends (v2, w1) of the V-phase stator coil V2 and the W-phase stator coil W1 wound around teeth 6g that are adjacent.

In the circuit board 6n, the first region where the first conductor pattern 70 is formed, the second region where the second conductor pattern 71 is formed, and the third region where the third conductor pattern 72 is formed are not overlapped when viewed from the direction perpendicular to the circuit board 6n. For this reason, in (D)-(F) of Figure 10, the first conductor pattern 70, the second conductor pattern 71, and the third conductor pattern 72 are provided in different layers of the circuit board 6n, but the first conductor pattern 70, the second conductor pattern 71, and the third conductor pattern 72 may be provided in the same layer of the circuit board 6n. Moreover, two of the first conductor pattern 70, the second conductor pattern 71, and the third conductor pattern 72 may be provided in the same layer, and the remaining one may be provided in another layer. That is, the circuit board 6n only needs to have at least one layer on which a conductor pattern may be formed.

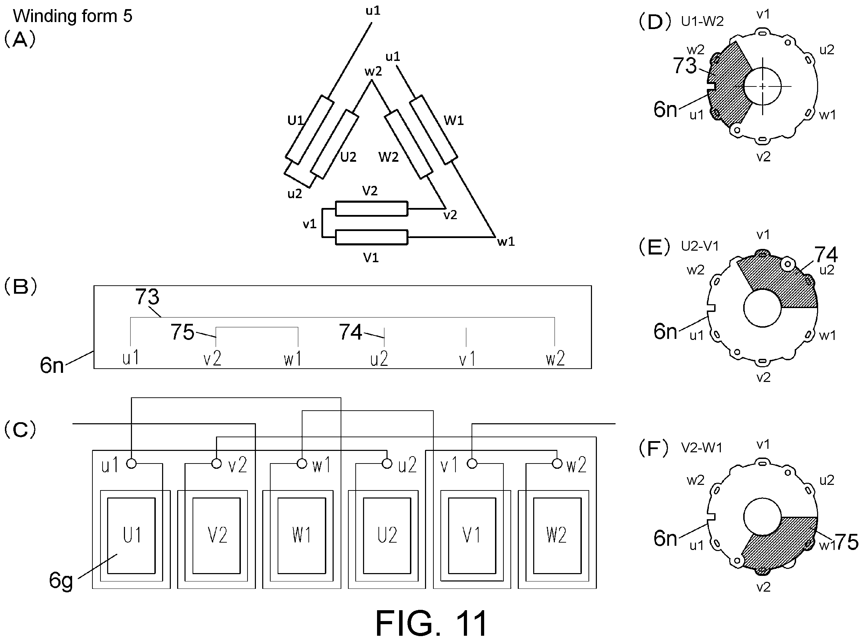

(Winding Form 5) (A)-(F) of Figure 11 relate to a winding form 5. (A) of Figure 11 is a schematic diagram showing the wiring order of the stator coils (U1, U2, V1, V2, W1, W2) in the winding form 5. (B) of Figure 11 is a schematic diagram showing the connection relationship of the end portions (u1, u2, v1, v2, w1, w2) of the stator coils on the circuit board 6n in the winding form 5. Figure 11 (C) is a schematic diagram showing the stator coils and their interconnection relationship when the stator core 6e is unfolded and viewed in the winding form 5. As shown in (D)-(F) of Figure 11 are schematic diagrams showing the conductor patterns of the circuit board 6n in the winding form 5 by hatching.

As shown in (A) of Figure 11 and (C) of Figure 11, in the winding form 5, the windings are wound around teeth 6g that face each other in the six teeth 6g, wound around every other teeth 6g in one direction, wound around teeth 6g that face each other, and wound around every other teeth 6g in the other direction, thereby winding the U-phase stator coil U1, the U-phase stator coil U2, the W-phase stator coil W2, the V-phase stator coil V2, the V-phase stator coil V1, and the W-phase stator coil W1 in order. As shown in (B) of Figure 11 and (D)-(F) of Figure 11, the circuit board 6n is formed with a first conductor pattern 73, a second conductor pattern 74, and a third conductor pattern 75, each of which is made of, for example, copper foil that functions as a short-circuit portion.

The first conductor pattern 73 electrically connects one ends (u1, w2) of the U-phase stator coil U1 and the W-phase stator coil W2 wound around teeth 6g that are adjacent. The second conductor pattern 74 electrically connects one ends (u2, v1) of the U-phase stator coil U2 and the V-phase stator coil V1 wound around teeth 6g that are adjacent. The third conductor pattern 75 electrically connects one ends (v2, w1) of the V-phase stator coil V2 and the W-phase stator coil W1 wound around teeth 6g that are adjacent.

In the circuit board 6n, the first region where the first conductor pattern 73 is formed, the second region where the second conductor pattern 74 is formed, and the third region where the third conductor pattern 75 is formed are not overlapped when viewed from the direction perpendicular to the circuit board 6n. For this reason, in (D)-(F) of Figure 11, although the first conductor pattern 73, the second conductor pattern 74, and the third conductor pattern 75 are provided in different layers of the circuit board 6n, the first conductor pattern 73, the second conductor pattern 74, and the third conductor pattern 75 may be provided in the same layer of the circuit board 6n. Moreover, two of the first conductor pattern 73, the second conductor pattern 74, and the third conductor pattern 75 may be provided in the same layer, and the remaining one may be provided in another layer. That is, the circuit board 6n only needs to have at least one layer on which a conductor pattern may be formed. Further, in any winding form, the circuit board 6n may be further provided with a layer for arranging a rotation detection element (a magnetic sensor 43 to be described later) for detecting rotation of the motor 6, or a layer on which a conductor pattern is formed may be used. The rotation detection element is preferably provided in a layer facing the motor 6 (rotor).

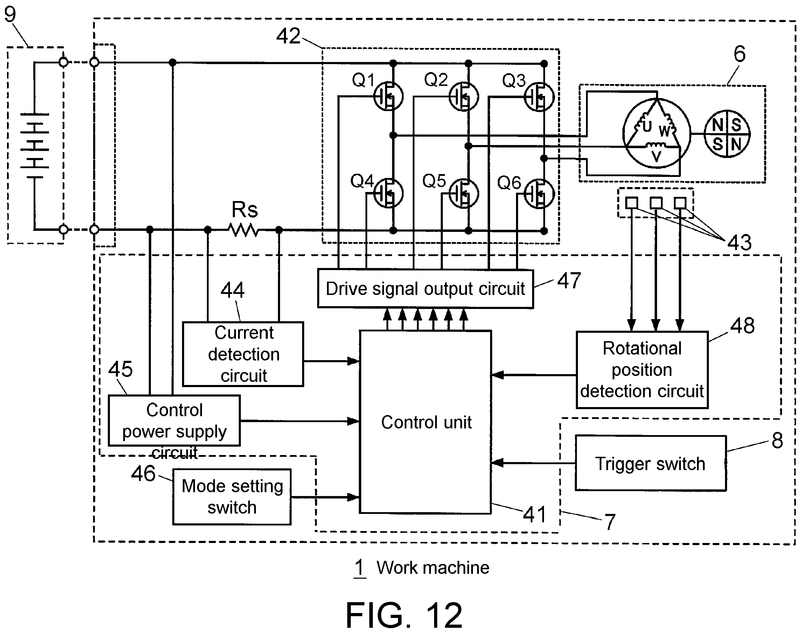

Figure 12 is a circuit block diagram of the work machine 1. An inverter circuit 42 is composed of switching elements Q1 to Q6 such as FETs and IGBTs connected in a three-phase bridge. The magnetic sensor 43 such as a Hall IC is arranged near the motor 6 and outputs a signal corresponding to the rotational position of the motor 6. The control board 7 is provided with a control unit 41, a current detection circuit 44, a control power supply circuit 45, a drive signal output circuit 47, and a rotational position detection circuit 48.

The current detection circuit 44 detects the current of the motor 6 from the voltage at both ends of the resistor Rs provided in the current path of the motor 6 and transmits it to the control unit 41. The control power supply circuit 45 converts the voltage of the battery pack 9 into power supply voltage for the control unit 41 and the like, and supplies it to the control unit 41 and the like. The drive signal output circuit 47 outputs drive signals to switching elements Q1 to Q6 of the inverter circuit 42 under the control of the control unit 41. The rotational position detection circuit 48 detects the rotational position of the motor 6 from the output signal of the magnetic sensor 43 and transmits it to the control unit 41. The control unit 41 includes a microcontroller and the like, and controls the inverter circuit 42 through the drive signal output circuit 47 in the mode set by a mode setting switch 46 according to the operation of the trigger switch 8, so as to control the driving of the motor 6.

According to this embodiment, the following effects can be obtained.
(1) Since short-circuiting (connection) between the stator coils 6h required for delta connection parallel winding is performed by the conductor pattern provided on the circuit board 6n, the connection between the stator coils 6h can be easily performed. Thus, it is possible to suppress the complication of the configuration while adopting the delta connection parallel winding which is advantageous for increasing the output, and easily assembly the motor 6 (improved assemblability). Moreover, the degree of freedom in design can be improved. Moreover, since the circuit board 6n may be used as a sensor board for detecting the rotation of the motor 6, there is no need to provide a member dedicated to short-circuiting.
(2) According to the winding form 1, since the six teeth 6g are sequentially wound around teeth 6g that are adjacent, the connecting wire for passing between the stator coils around the central axis is simple and may be easily connected.
(3) According to the winding forms 2 and 3, although the connecting wires are more complicated than the winding form 1, the conductor patterns for short circuiting may be made smaller, and the number of layers of the circuit board 6n can be further reduced. Thus, a substrate with two layers can be realized.
(4) According to the winding forms 4 and 5, although the connecting wire is more complicated than the winding forms 2 and 3, the conductor pattern for short circuiting may be made smaller, and the number of layers of the circuit board 6n can be reduced by up to two layers. Thus, a substrate of one layer can be realized.

Although the invention has been described above using the example of the embodiments, it is understood by those skilled in the art that various modifications may be made to each component and each processing process of the embodiments within the scope of the claims. Modifications will be discussed below.

The work machine 1 is not limited to a saver saw, and may be of other types having a brushless motor. The work machine 1 is not limited to a cordless type that operates on power from the battery pack 9, and may be a corded type that operates on power supplied from an external AC power supply. The number of the teeth 6g and the stator coils 6h, and the number of the rotor magnets, and the like are not limited to the specific numbers exemplified in the embodiments and are arbitrary.

### Reference Signs List

- 1: work machine
- 3: housing
- 3a: motor accommodation portion
- 3b: handle portion
- 4: front cover
- 5: saw blade (tip tool)
- 6: motor (electric motor)
- 6a: output shaft (rotating shaft)
- 6b: rotor core
- 6c: rotor magnet
- 6e: stator core
- 6h: stator coil
- 6f: yoke portion
- 6g: teeth (salient pole)
- 6h: stator coil
- 6i: insulator
- 6j: fusing terminal
- 6k: protruding portion
- 6m: hooking portion
- 6n: circuit board
- 6p: through hole
- 6r: insulator
- 7: control board
- 8: trigger switch
- 9: battery pack
- 61-75: conductor pattern

## Claims

1. A work machine, comprising:
a brushless motor having a stator having a plurality of teeth, a rotor rotating with respect to the stator, and a winding having coils wound around each of the plurality of teeth; and
an output portion driven by the brushless motor, the work machine further comprising:
a short-circuit portion having a first short-circuit portion that connects coils wound around teeth that are adjacent and a second short-circuit portion that connects coils wound around teeth that are non-adjacent.

2. A work machine, comprising:
a brushless motor having a stator having a plurality of teeth, a rotor rotating with respect to the stator, and a winding wound around the stator;
a circuit board to which the winding is connected; and
an output portion driven by the brushless motor,
wherein the winding has a plurality of coils forming mutually different phases and a plurality of coils forming the same phase, and
the plurality of coils forming mutually different phases and/or the plurality of coils forming the same phase are connected by a short-circuit portion provided on the circuit board.

3. The work machine according to claim 1 or 2, comprising:
a circuit board to which the winding is connected,
wherein the short-circuit portion is a pattern formed on the circuit board.

4. The work machine according to any one of claims 1 to 3, comprising:
wherein in the winding, a plurality of the coils of different phases are delta-connected, and a plurality of the coils of the same phase are connected in parallel.

5. The work machine according to claim 4,
wherein the winding is sequentially wound around teeth that are adjacent in the plurality of teeth.

6. The work machine according to claim 3,
wherein a first pattern for connecting coils wound around the teeth that are non-adjacent or that face each other is formed in a first region of the circuit board;
a second pattern for connecting coils wound around the teeth that are non-adjacent or that face each other is formed in a second region of the circuit board; and
a third pattern for connecting coils wound around the teeth that are non-adjacent or that face each other is formed in a third region of the circuit board.

7. The work machine according to claim 4,
wherein the winding is sequentially wound around teeth that are adjacent in one direction in the plurality of teeth, then wound around teeth that face each other in the plurality of teeth, and wound around teeth that are adjacent in the other direction.

8. The work machine according to claim 4,
wherein the winding is wound around teeth that face each other, sequentially wound around teeth that are adjacent in one direction, wound around teeth that face each other, and wound around teeth that are adjacent in the other direction.

9. The work machine according to claim 3,
wherein a first pattern for connecting coils wound around the teeth that are adjacent is formed in a first region of the circuit board;
a second pattern for connecting coils wound around the teeth that are non-adjacent is formed in a second region of the circuit board; and
a third pattern for connecting coils wound around the teeth that are non-adjacent is formed in a third region of the circuit board.

10. The work machine according to claim 4,
wherein the winding is wound around every other teeth in one direction in the plurality of teeth, wound around teeth that face each other, and wound around every other teeth in the other direction.

11. The work machine according to claim 4,
wherein the stator has a plurality of teeth around which the winding is wound, and
the winding is wound around teeth that face each other in the plurality of teeth, wound around every other teeth in one direction, wound around teeth that face each other, and wound around every other teeth in the other direction.

12. The work machine according to claim 3,
wherein a first pattern for connecting coils wound around the teeth that are adjacent is formed in a first region of the circuit board;
a second pattern for connecting coils wound around another of the teeth that are adjacent is formed in a second region of the circuit board; and
a third pattern for connecting coils wound around yet another of the teeth that are adjacent is formed in a third region of the circuit board.

13. A work machine, comprising:
a brushless motor having a stator having a plurality of teeth, a rotor rotating with respect to the stator, and a winding wound around the stator;
a circuit board to which the winding is connected; and
an output portion driven by the brushless motor,
wherein the winding has a plurality of delta-connected coils forming mutually different phases and a plurality of parallel-connected coils forming the same phase, and
the plurality of delta-connected coils and the plurality of parallel-connected coils are connected by a pattern formed on the circuit board.
